# EUROPEAN PATENT SPECIFICATION

(11) **EP 2 825 937 B1**
(45) Date of publication and mention of the grant of the patent: **19.04.2017**
(21) Application number: 12710446.1
(22) Date of filing: 15.03.2012
(51) Int. Cl.: G06F 3/041, G06F 3/044, G06F 3/045, G06F 1/16

(54) **METHOD FOR CONTROLLING A TOUCH SENSOR**
VERFAHREN ZUR STEUERUNG EINES BERÜHRUNGSSENSORS
PROCÉDÉ DE COMMANDE D'UN CAPTEUR TACTILE

(43) Date of publication of application: 21.01.2015
(73) Proprietor: Sony Mobile Communications Inc, Tokyo 140-0002 (JP)
(72) Inventor: KLINGHULT, Gunnar, S-22359 Lund (SE)
(74) Representative: Banzer, Hans-Jörg
(86) International application number: PCT/EP2012/001165
(87) International publication number: WO 2013/135252

(56) References cited:
- EP-A1- 2 261 781
- US-A1- 2010 123 686
- US-A1- 2010 201 635
- US-A1- 2011 115 732
- Anonymous: "Lock-in amplifier", Wikipedia, the free encyclopedia , 28 February 2012 (2012-02-28), XP002685977, Retrieved from the Internet: URL:http://en.wikipedia.org/w/index.php?ti tle=Lock-in_amplifier&oldid=479359020 [retrieved on 2012-10-25]

## Description

### FIELD OF THE INVENTION

The present application relates to a method for controlling a touch sensor, especially to a method for detecting an actuation position where the user touches or approaches the touch sensor and detecting a force being applied to the touch sensor. The present application relates furthermore to a controller for controlling a touch sensor, a sensor arrangement, and a device comprising the sensor arrangement.

### BACKGROUND OF THE INVENTION

Touch sensors are known in the art for controlling devices, especially mobile or portable devices, via a user interface. The touch sensor may comprise a touch sensible panel which is arranged on top of a display forming a so-called touch screen. The touch screen provides a very intuitive way of operating the device. Information can be displayed on the display and in response to the displayed information the user may touch the display for initiating actions or operations. The touch sensor may work by detecting a change of capacitance when the user approaches or touches the touch sensor. The touch sensor may furthermore provide a location information indicating where the user touches or approaches the touch sensor. Thus a two-dimensional user interface may be provided. In connection with complex applications, a three-dimensional user interface may be preferred. A third input dimension may be realized by measuring a force being applied by the user to a surface of the touch screen. A strain gauge sensor may be used for measuring a strain on for example a glass window of the touch screen created by a force applied by the user on the glass window. However, strain gauge sensoring is very sensitive with respect to electrical noise present in an environment of the strain gauge sensor. For example, the display as well as the touch sensing may transmit noise signals, for example a square wave signal, of several hundred kHz at a voltage level of several volts, for example 5-10 V, which may disturb the strain gauge sensoring.

In this context, US 2010/0201635 A1 relates to a touch sensor comprising an insulating support defining a front side, and a membrane arranged on the front side of the support. The membrane includes at least one layer including a pattern of electrically conductive material. The touch sensor comprises furthermore a capacitance measuring unit configured for measuring a capacitance between at least a portion of the pattern of one of the at least one layer and its surrounding environment. Furthermore, the touch sensor comprises at least one resistance measuring unit configured for measuring a resistance between a pair of points of the pattern of one of the at least one layer.

US 2011/0115732 A1 relates to a multimode touch screen device. The principle of the multimode touch screen device consists in having two operating principles coexisting in a single processing device, associated with a single substrate capable of operating equally and simultaneously in multiplexed resistive and projected capacitive mode. The capacitance information and the resistance information are modulated on the same signal making it possible to simultaneously obtain these two items of information without latency. A touch pad of the multimode touch screen device is composed of rows and columns. A high frequency voltage supplies a first multiplexer in such a way that each row is subjected to an input voltage. A synchronous demodulator operates at the same frequency as the high frequency voltage generator and delivers a plurality of output voltages on each column. At an intersection of a row and a column, the user's hand or finger will cause a variation in impedance having a resistive component and a capacitive component. The impedance existing between each output voltage and the input voltage is calculated to simultaneously determine its resistive and capacitive component, to deduce therefrom the type of action of the user on the touch pad.

Therefore, there is a need to provide a simple, reliable and robust measuring of a strain, especially with respect to electrical and electromagnetic noise.

### SUMMARY OF THE INVENTION

According to the present invention, this object is achieved by a method for controlling a touch sensor as defined in claim 1, a controller for controlling a touch sensor as defined in claim 7, a sensor arrangement as defined in claim 9, and a device as defined in claim 11. The dependent claims define preferred and advantageous embodiments of the invention.

According to an aspect of the present invention, a method for controlling a touch sensor is provided. The touch sensor comprises a support layer, for example a glass window or a resin window, and an electrically conductive sensor structure thereon. The electrically conductive sensor structure forms a plurality of capacitors. Each of the capacitors has a capacitance varying in response to a user touching or approaching the corresponding capacitor. The electrically conductive sensor structure comprises a piezoresistive material and is furthermore configured to provide a resistance varying in response to a force being applied to the support layer. For example, the resistance may vary in response to a varying strain applied to the piezoresistive material upon a force applied by the user to the support layer bending the support layer. According to the method, an alternating electrical signal is supplied to the electrically conductive sensor structure for scanning the plurality of capacitors. An actuation position where the user touches or approaches the touch sensor is determined based on the alternating electrical signal and the capacitances of the plurality of capacitors. Furthermore, an electrical signal, which is a function of the resistance of the electrically conductive sensor structure, is detected and the detected electrical signal is synchronously demodulated. The synchronous demodulation is performed based on the alternating electrical signal. The demodulated electrical signal may be furthermore low-pass filtered.

The electrical signal, which is a function of the resistance of the electrically conductive sensor structure, varies in response to the force being applied to the support layer. However, the electrical signal may be disturbed by noise, DC drifts in the electronics and line noise pickup. By detecting the electrical signal while the electrically conductive sensor structure is supplied with the alternating electrical signal, and synchronously demodulating the electrical signal and low-pass filtering the demodulated electrical signal, an amplitude information corresponding to the resistance can be recovered. The disturbances all get mixed to the carrier frequency of the alternating electrical signal and can be removed by means of the low-pass filter. Therefore, the noise level will be greatly reduced. Furthermore, no synchronization between the touch and force sensing is needed. The force sensing can be done at the same time while the touch sensing is done. There is no need to have a blanking period where the touch sensing is switched off while the force is measured and vice versa. Thus, the total scan rate will speed up and hardware and software for implementing the method can be simplified.

According to an embodiment, the demodulation and filtering of the detected electrical signal is performed with a lock-in amplifier. The lock-in amplification is a technique used to separate a small, narrow-band signal from interfering noise. The lock-in amplifier acts as a detector and narrow-band filter combined. Very small signals can be detected in the presence of large amounts of uncorrelated noise when the frequency and phase of the desired signal are known. A sensing circuit that uses a DC excitation may be plagued by errors caused by thermocouple effects, 1/f noise, DC drifts in the electronics, and line noise pickup. By exciting the force sensoring circuit with an alternating electrical signal, amplifying the detected electrical signal with an amplifier, and synchronously demodulating and low-pass filtering the resulting signal, the AC phase and amplitude information from the sensor circuit is recovered as a DC signal at the output of the filter. The disturbances are mixed to the carrier frequency of the alternating electrical signal and are removed by means of the low-pass filter.

According to a further embodiment, performing the demodulation of the detected electrical signal comprises multiplying the detected electrical signal by the alternating electrical signal. Thus, the demodulation of the detected electrical signal can be easily accomplished. Multiplying the detected electrical signal by the alternating electrical signal may be performed in an analog circuit or may be performed in a digital domain, for example in a digital signal processor, after converting the detected electrical signal into a corresponding digital signal.

The electrical signal is detected with a Wheatstone bridge. A part of the piezoresistive material of the electrically conductive sensor structure constitutes a branch of the Wheatstone bridge. By supplying the alternating electrical signal to the electrically conductive sensor structure, the Wheatstone bridge is supplied with the alternating electrical signal as a supply voltage. The Wheatstone bridge is able to detect small signal values or small changes in signal values and may therefore advantageously be used for detecting the electrical signal which is a function of the resistance of the electrically conductive sensor structure.

According to a further embodiment, the demodulation of the detected electrical signal is performed by converting the detected electrical signal into a digital signal, and performing a synchronous demodulation of the digital signal based on the alternating electrical signal. The synchronous demodulation of the digital signal may comprise a determination of a frequency spectrum of the digital signal and a generation of the demodulated digital signal based on the frequency spectrum and a frequency of the alternating electrical signal.

According to another aspect of the present invention, a controller for controlling a touch sensor is provided. The touch sensor comprises a support layer and an electrically conductive sensor structure thereon. The electrically conductive sensor structure forms a plurality of capacitors. The capacitors may be arranged in a matrix comprising several rows and columns of electrically conductive lines. The capacitors may be constituted at crossing points of the rows and columns. The capacitors have a capacitance varying in response to a user touching or approaching the corresponding capacitor. The electrically conductive sensor structure comprises a piezoresistive material and is configured to provide a resistance varying in response to a force being applied to the support layer. The controller is configured the supply an alternating electrical signal to the electrically conductive sensor structure for scanning the plurality of capacitors. The alternating electrical signal may be supplied to the electrically conductive sensor structure such that for example the columns are sequentially energized with the alternating electrical signal and the capacitive sensing is performed at the rows. An actuation position, where the user touches or approaches the touch sensor, is determined based on the alternating electrical signal and the capacitances of the plurality of capacitors. Furthermore, the controller is configured to detect an electrical signal which is a function of the resistance of the electrically conductive sensor structure. For example, a current through one of the columns of the electrically conductive sensor structure may be detected as the electrical signal. Finally, the controller is configured to perform a synchronous demodulation of the detected electrical signal based on the alternating electrical signal. Thus, the controller can detect the resistance with a noise level greatly reduced. Based on the resistance a force applied to the support layer may be determined by the controller.

Furthermore, the controller may be configured to perform the above-described methods and embodiments.

According to a further aspect of the present invention, a sensor arrangement is provided which comprises the above-described controller and the above-described touch sensor. The piezoresistive material of the electrically conductive sensor structure may comprise for example indium tin oxide (ITO), graphene, or carbon nanotubes. These materials provide a piezoresistive property and may be coated on a transparent support layer in a thin layer, for example on a glass surface or a resin surface. A thin layer of these materials has a high transparency and thus a sensor arrangement may be arranged on top of a display for constituting a touch screen for a user interface.

According to a further aspect of the present invention, a device comprising the above-described sensor arrangement is provided. The device comprises a mobile or portable device, for example a mobile phone, a personal digital assistant, a mobile music player or a mobile navigation system.

Although specific features described in the above summary and in the following detailed description are described in connection with specific embodiments and aspects, it is to be understood that the features of the embodiments and aspects may be combined with each other unless specifically noted otherwise.

### BRIEF DESCRIPTION OF THE DRAWINGS

The invention will now be described in more detail with reference to the accompanying drawings.
Fig. 1 shows a sensor arrangement according to an embodiment of the present invention.
Fig. 2 shows a device according to an embodiment of the present invention.
Fig. 3 shows a touch sensor according to another embodiment of the present invention.

### DETAILED DESCRIPTION OF PREFERRED EMBODIMENTS

In the following, exemplary embodiments of the invention will be described in more detail. It has to be understood that the following description is given only for the purpose of illustrating the principles of the invention and is not to be taken in a limiting sense. Rather, the scope of the invention is defined only by the appended claims and is not intended to be limited by the exemplary embodiments hereinafter.

It is to be understood that the features of the various exemplary embodiments described herein may be combined with each other unless specifically noted otherwise. Same reference signs in the various drawings and the following description refer to similar or identical components.

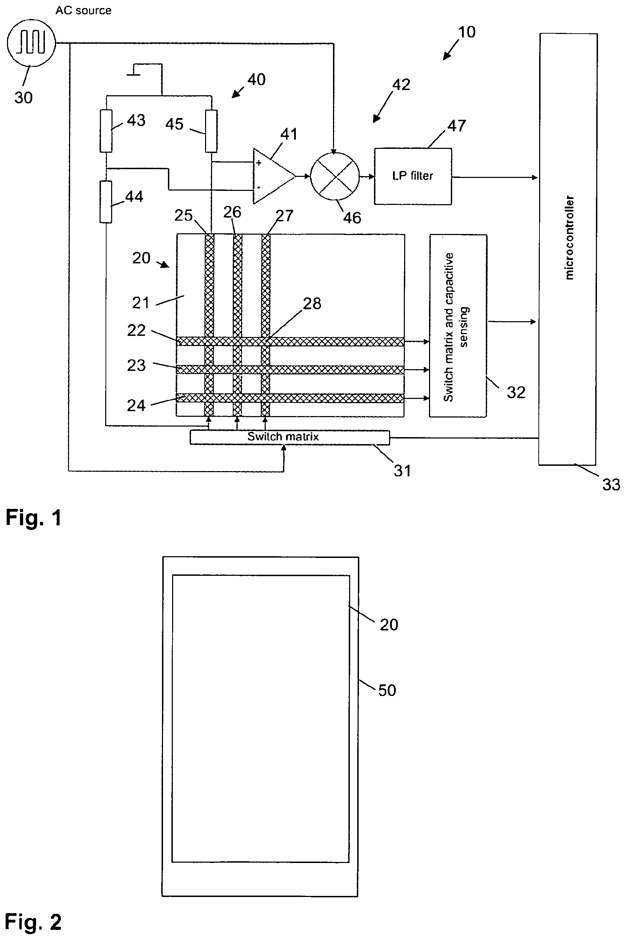

Fig. 1 shows a sensor arrangement 10 comprising a touch sensor 20 and a controller circuit for controlling the touch sensor 20.

The touch sensor 20 comprises a support layer 21 and an electrically conductive sensor structure 22-27 thereon. The support layer 21 may comprise for example an isolating transparent material, for example a glass window or a resin window. The electrically conductive sensor structure 22-27 comprises a piezoresistive material, for example indium tin oxide (ITO), graphene or carbon nanotubes. As shown in Fig. 1, the electrically conductive sensor structure 22-27 may comprise longitudinal electrodes 22-24 arranged in rows and longitudinal electrodes 25-27 arranged in columns. The row electrodes 22-24 are spaced apart from each other and are therefore electrically isolated from each other. The column electrodes 25-27 are also spaced apart from each other and therefore electrically isolated from each other. At crossing points between the row electrodes 22-24 and the column electrodes 25-27, the row electrodes 22-24 are isolated from the column electrodes 25-27 by an additional isolating layer (not shown). One of the crossing points is designated with reference sign 28. At the crossing points 28 capacitors are formed between the row electrodes 22-24 and the column electrodes 25-27. When a user touches or approaches the capacitors at the crossing points 28, a capacitance of the corresponding capacitor varies. Furthermore, when the user applies a force on the support layer 21, the support layer 21 may be slightly deformed and thus a change in strain is applied to the electrodes 22-27. Due to the piezoresistive property of the material of the electrodes 22-27, a resistance of the electrodes 22-27 varies in response to the change in strain, and thus the resistance varies in response to the force applied to the support layer 21. The arrangement of the sensor structure shown in Fig. 1 is only an exemplary arrangement. Other arrangements may also be used, for example a diamond arrangement of the electrodes in which a change of capacitance occurs between two neighboring diamond-shaped fields when a user approaches or touches the touch sensor 20. The diamond-shaped fields may also be coupled in rows and columns.

The touch sensor 20 described above is illustrated with three row electrodes 22-24 and three column electrodes 25-27. However, these numbers are only exemplary and any other number of row and column electrodes may be used depending on the size of the touch sensor 20 and the required resolution.

Fig. 1 furthermore shows a control circuit for controlling the touch sensor 20. The control circuit comprises an alternating current source (AC source) 30, a switch matrix 31, a sensing unit 32 and a microcontroller 33. The AC source 30 drives the switch matrix 31 such that the row electrodes 25-27 are activated, for example sequentially or in a predefined order. Due to the AC source 30 and the switch matrix 31 to each of the column electrodes 25-27 an alternating signal is supplied. The sensing unit 32 monitors the row electrodes 22-24 and senses a capacitance of the row electrodes 22-24. For example, the sensing unit may comprise a switching matrix for selectively monitoring the row electrodes 22-24 individually one after the other and sensing a corresponding capacitance. The microcontroller 33 determines a touch position where a user touches or approaches the touch sensor 20 based on the changes in capacitance at the capacitors at the crossing points 28 by correlating which column electrode 25-27 is actually activated by the switch matrix 31 and a sensed capacitance of each of the row electrodes 22-24 sensed by the sensing unit 32.

The control circuit furthermore comprises a Wheatstone bridge 40, an AC amplifier 41 and a lock-in amplifier 42. The Wheatstone bridge 40 comprises three resistors 43-45 and at least one of the electrodes 22-27 of the touch sensor 20 as a forth resistor. The resistors of the Wheatstone bridge are connected in a square. The AC source 30 supplies via the switch matrix 31 a supply voltage to one diagonal of the resistor square. Inputs of the amplifier 41 are sensing a voltage over the other diagonal of the resistor square of the Wheatstone bridge 40. The Wheatstone bridge is adapted to measure extremely small changes in resistance. As the piezoresistive material of the electrodes 22-27 of the touch sensor 20 provides only a very small change in resistance due to a change in strain, the Wheatstone bridge 40 is a very appropriate way of measuring the change of resistance of e.g. the electrode 25. However, any other kind of high precision measuring of the resistance or change in resistance of the electrode 25 may be used instead of the Wheatstone bridge 40. The output of the amplifier 41 is fed into the lock-in amplifier 42. The lock-in amplifier 42 comprises a demodulator 46 and a low pass filter 47. The signal from the AC source 30 is fed to the demodulator 46. The demodulator 46 may comprise a multiplier multiplying the output of the amplifier 41 and the signal from the AC source 30. Thus, the output signal from the amplifier 41 is synchronously demodulated with the AC source 30. The low pass filter 47 filters the demodulated output from the demodulator 46 and provides a signal which varies in response to a change in resistance of the column electrode 25. The output from the low pass filter 47 may be supplied to the microcontroller 33 which determines from the change in resistance of the column electrode 25 a force being applied from the user to the touch sensor 20.

The force sensing by monitoring the change in resistance of the piezoresistive material of the electrodes 22-27 may in general be disturbed by the capacitive touch sensing and electromagnetic fields from a display which may be arranged near the touch sensor 20. The lock-in amplifier 42 helps to separate a small narrow-band signal from interfering noise. The lock-in amplifier acts as a combined detector and narrow-band filter. Very small signals can be detected in the presence of large amounts of uncorrelated noise when the frequency and phase of the detected signal are known. Frequency and phase are known from the AC source 30 and thus, by demodulating the signal detected by the Wheatstone bridge 40, uncorrelated noise can be easily removed.

Fig. 2 shows a mobile device 50 comprising the touch sensor 20 and the control circuit (not shown) described above. The mobile device 50 may comprise for example a mobile phone, a so-called smart phone. The touch sensor 20 may be arranged in combination with a display (not shown) of the device 50 to form a so-called touch screen for a user interface of the device 50. As described in connection with Fig. 1, the control circuit may determine an actuation position where a user touches or approaches the touch sensor 20 and additionally a force which is applied by the user to the touch sensor 20.

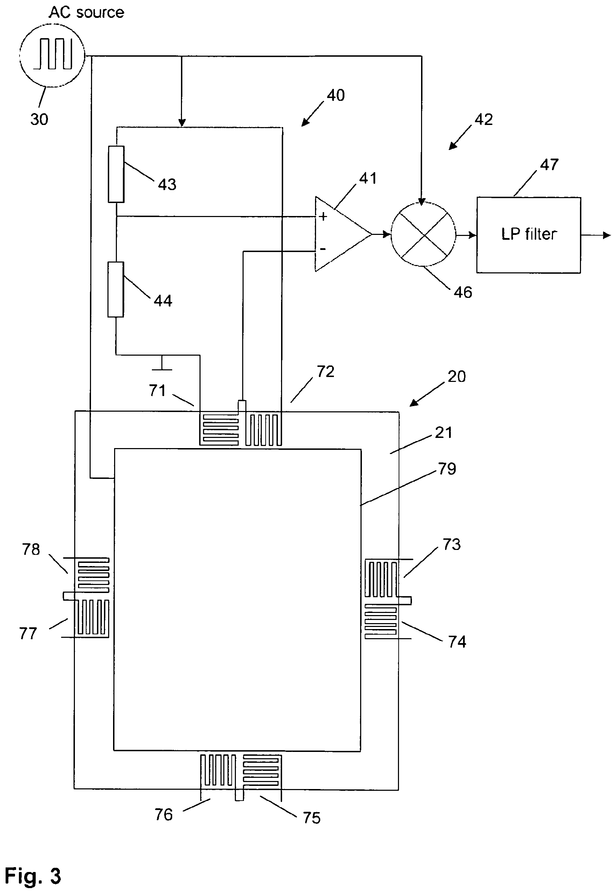

Fig. 3 shows another embodiment of a touch sensor 20 and a circuit for driving the touch sensor 20. The touch sensor 20 comprises a support layer 21 and an electrically conductive sensor structure 71-79 thereon. The support layer 21 may comprise for example an isolating transparent material, for example a glass window or a resin window. The electrically conductive sensor structure comprises an electrode structure 79 forming for example a capacitive touch sensor structure like the electrodes 22-27 of the embodiment described above in connection with Fig. 1. Furthermore, the electrically conductive sensor structure comprises structures 71-78 arranged for example at the four sides of the support layer 21 and configured to provide a change in resistance in response to a force being applied to the support layer 21. The structures 71-78 comprise a piezoresistive material, for example indium tin oxide (ITO), graphene or carbon nanotubes. Therefore the structures 71-78 act as strain gauge sensor structures. Pairs of the strain gauge sensor structures 71-78 are each coupled to a corresponding Wheatstone bridge 40, amplifier 41, and lock-in amplifier 42, whereby in Fig. 3 only the components 40-42 coupled to the strain gauge sensor structure pair 71, 72 are shown for clarity reasons. The detailed structure of the electrode structure 79 as well as the switch matrix 31, 32 and the controller 33 are not shown in Fig. 3 for clarity reasons.

The electrically conductive sensor structure 71-79, i.e. the electrode structure 79 as well as the strain gauge sensor structures 71-78, are connected to the AC source 30 and supplied with an alternating electrical signal. As described in connection with Fig. 1 above, the alternating signal from the AC source 30 may be used for determining a touch position based on signals from the electrode structure 79 and for determining a force applied to the support layer 21 based on signals from the strain gauge sensor structures 71-78 processed by the lock-in amplifier 42, without influencing each other.

While exemplary embodiments have been described above, various modifications may be implemented in other embodiments. For example, one or more of the resistors 33-35 of the Wheatstone bridge 40 may be replaced by further electrodes 22-27 of the touch sensor 20. Furthermore, the lock-in amplifier 42 may be implemented in a digital domain, for example in a software of the microcontroller 33. Therefore, the output of the amplifier 41 may be converted with an analog-to-digital converter into a corresponding digital signal and the demodulation and the low-pass filtering may be performed on the digital signal in the microcontroller 33. For demodulating and low-pass filtering the digital signal in the digital domain, a frequency spectrum of the digital signal may be determined by the microcontroller 33 and the demodulated digital signal may be generated based on the frequency spectrum and the frequency of the AC source 30.

Finally, it is to be understood that all the embodiments described above are considered to be comprised by the present invention as it is defined by the appended claims.

## Claims

1. A method for controlling a touch sensor, the touch sensor (20) comprising a support layer (21) and an electrically conductive sensor structure (22-27) thereon, wherein the electrically conductive sensor structure (22-27) forms a plurality of capacitors (28), the capacitors (28) having a capacitance varying in response to a user touching or approaching the corresponding capacitor (28), and wherein the electrically conductive sensor structure (22-27) comprises a piezoresistive material and is configured to provide a resistance varying in response to a force being applied to the support layer (21), the method comprising:
- supplying an alternating electrical signal (30) to the electrically conductive sensor structure (22-27) for scanning the plurality of capacitors (28),
- determining an actuation position where the user touches or approaches the touch sensor (20) based on the alternating electrical signal (30) and the capacitances of the plurality of capacitors (28),
- detecting an electrical signal which is a function of the resistance of the electrically conductive sensor structure (22-27) with a Wheatstone bridge (40), wherein a part (25) of the piezoresistive material of the electrically conductive sensor structure (22-27) constitutes a branch of the Wheatstone bridge (40), and wherein the Wheatstone bridge (40) is supplied with the alternating electrical signal (30) as a supply voltage, and
- performing a synchronous demodulation of the detected electrical signal based on the alternating electrical signal (30).

2. The method according to claim 1, further comprising:
- low-pass filtering the demodulated electrical signal.

3. The method according to claim 2, wherein performing the demodulation and filtering of the detected electrical signal comprises demodulating and filtering the detected electrical signal with a lock-in amplifier (42).

4. The method according to any one of the preceding claims, wherein performing the demodulation of the detected electrical signal comprises multiplying the detected electrical signal by the alternating electrical signal (30).

5. The method according to any one of the preceding claims, wherein performing the demodulation of the detected electrical signal comprises:
- converting the detected electrical signal into a digital signal, and
- performing a synchronous demodulation of the digital signal based on the alternating electrical signal (30).

6. The method according to claim 5, wherein performing the demodulation of the digital signal comprises:
- determining a frequency spectrum of the digital signal, and
- generating the demodulated digital signal based on the frequency spectrum and a frequency of the alternating electrical signal (30).

7. A controller for controlling a touch sensor, the touch sensor (20) comprising a support layer (21) and an electrically conductive sensor structure (22-27) thereon, wherein the electrically conductive sensor structure (22-27) forms a plurality of capacitors (28), the capacitors (28) having a capacitance varying in response to a user touching or approaching the corresponding capacitor (28), and wherein the electrically conductive sensor structure (22-27) comprises a piezoresistive material and is configured to provide a resistance varying in response to a force being applied to the support layer (21), wherein the controller (30-42) comprises a Wheatstone bridge (40) and is configured to
- supply an alternating electrical signal (30) to the electrically conductive sensor structure (22-27) for scanning the plurality of capacitors (28),
- determine an actuation position where the user touches or approaches the touch sensor (20) based on the alternating electrical signal (30) and the capacitances of the plurality of capacitors (28),
- detect an electrical signal which is a function of the resistance of the electrically conductive sensor structure (22-27) with the Wheatstone bridge (40), wherein a part (25) of the piezoresistive material of the electrically conductive sensor structure (22-27) constitutes a branch of the Wheatstone bridge (40), and wherein the Wheatstone bridge (40) is supplied with the alternating electrical signal (30) as a supply voltage, and
- perform a synchronous demodulation of the detected electrical signal based on the alternating electrical signal (30).

8. The controller according to claim 7, wherein the controller is configured to perform the method steps according to any one of claims 2-6.

9. A sensor arrangement, comprising:
- a controller (30-42) according to claim 7 or 8, and
- the touch sensor (20).

10. The sensor arrangement according to claim 9, wherein the piezoresistive material comprises at least one material of a group consisting of indium tin oxide, graphene, and carbon nanotubes.

11. A device comprising a sensor arrangement (10) according to claim 9 or 10, wherein the device comprises at least one device (50) of a group consisting of a mobile phone, a personal digital assistant, a mobile music player, and a navigation system.

## Patentansprüche

1. Verfahren zum Steuern eines Berührungssensors, wobei der Berührungssensor (20) eine Trägerschicht (21) und eine elektrisch leitfähige Sensorstruktur (22-27) darauf umfasst, wobei die elektrisch leitfähige Sensorstruktur (22-27) mehrere Kondensatoren (28) bildet, wobei die Kondensatoren (28) eine Kapazität aufweisen, welche sich in Abhängigkeit von einem Benutzer, welcher den entsprechenden Kondensators (28) berührt oder sich diesem nähert, ändert, und wobei die elektrisch leitfähige Sensorstruktur (22-27) ein piezoresistives Material umfasst und ausgestaltet ist, einen Widerstand bereitzustellen, welcher sich in Abhängigkeit von einer Kraft ändert, welche auf die Trägerschicht (21) ausgeübt wird, wobei das Verfahren umfasst:
- Zuführen eines wechselnden elektrischen Signals (30) zu der elektrisch leitfähigen Sensorstruktur (22-27) zum Abtasten der mehreren Kondensatoren (28),
- Bestimmen einer Betätigungsposition, wo der Benutzer den Berührungssensor (20) berührt oder sich diesem nähert, basierend auf dem wechselnden elektrischen Signal (30) und den Kapazitäten der mehreren Kondensatoren (28),
- Erfassen eines elektrischen Signals, welches eine Funktion des Widerstandes der elektrisch leitfähigen Sensorstruktur (22-27) ist, mit einer Wheatstone-Brücke (40), wobei ein Teil (25) des piezoresistiven Materials der elektrisch leitfähigen Sensorstruktur (22-27) einen Zweig der Wheatstone-Brücke (40) bildet, und wobei die Wheatstone-Brücke (40) mit dem wechselnden elektrischen Signal (30) als eine Versorgungsspannung versorgt wird, und
- Ausführen einer synchronen Demodulation des erfassten elektrischen Signals basierend auf dem wechselnden elektrischen Signal (30).

2. Verfahren nach Anspruch 1, ferner umfassend:
- Tiefpassfiltern des demodulierten elektrischen Signals.

3. Verfahren nach Anspruch 2, wobei das Ausführen der Demodulation und das Filtern des erfassten elektrischen Signals ein Demodulieren und Filtern des erfassten elektrischen Signals mit einem Lock-in-Verstärker (42) umfasst.

4. Verfahren nach einem der vorhergehenden Ansprüche, wobei das Ausführen der Demodulation des erfassten elektrischen Signals ein Multiplizieren des erfassten elektrischen Signals mit dem wechselnden elektrischen Signal (30) umfasst.

5. Verfahren nach einem der vorhergehenden Ansprüche, wobei das Ausführen der Demodulation des erfassten elektrischen Signals umfasst:
- Wandeln des erfassten elektrischen Signals in ein Digitalsignal, und
- Ausführen einer synchronen Demodulation des Digitalsignals basierend auf dem wechselnden elektrischen Signal (30).

6. Verfahren nach Anspruch 5, wobei das Ausführen der Demodulation des Digitalsignals umfasst:
- Bestimmen eines Frequenzspektrums des Digitalsignals, und
- Erzeugen des demodulierten Digitalsignals basierend auf dem Frequenzspektrum und einer Frequenz des wechselnden elektrischen Signals (30).

7. Steuerung zum Steuern eines Berührungssensors, wobei der Berührungssensor (20) eine Trägerschicht (21) und eine elektrisch leitfähige Sensorstruktur (22-27) darauf umfasst, wobei die elektrisch leitfähige Sensorstruktur (22-27) mehrere Kondensatoren (28) bildet, wobei die Kondensatoren (28) eine Kapazität aufweisen, welche sich in Abhängigkeit von einem Benutzer, welcher den entsprechenden Kondensator (28) berührt oder sich diesem nähert, verändert, und wobei die elektrisch leitfähige Sensorstruktur (22-27) ein piezoresistives Material umfasst und ausgestaltet ist, einen Widerstand bereitzustellen, welcher sich in Abhängigkeit von einer Kraft ändert, welche auf die Trägerschicht (21) ausgeübt wird, wobei die Steuerung (30-42) eine Wheatstone-Brücke (40) umfasst und ausgestaltet ist,
- ein wechselndes elektrisches Signal (30) zu der elektrisch leitfähigen Sensorstruktur (22-27) zum Abtasten der mehreren Kondensatoren (28) zuzuführen,
- eine Betätigungsposition, wo der Benutzer den Berührungssensor (20) berührt oder sich diesem nähert, basierend auf dem wechselnden elektrischen Signal (30) und den Kapazitäten der mehreren Kondensatoren (28) zu bestimmen,
- ein elektrisches Signal, welches eine Funktion des Widerstandes der elektrisch leitfähigen Sensorstruktur (22-27) ist, mit einer Wheatstone-Brücke (40) zu erfassen, wobei ein Teil (25) des piezoresistiven Materials der elektrisch leitfähigen Sensorstruktur (22-27) einen Zweig der Wheatstone-Brücke (40) bildet, und wobei die Wheatstone-Brücke (40) mit dem wechselnden elektrischen Signal (30) als eine Versorgungsspannung versorgt wird, und
- eine synchrone Demodulation des erfassten elektrischen Signals basierend auf dem wechselnden elektrischen Signal (30) auszuführen.

8. Steuerung nach Anspruch 7, wobei die Steuerung ausgestaltet ist, die Verfahrensschritte nach einem der Ansprüche 2-6 auszuführen.

9. Sensoranordnung umfassend:
- eine Steuerung (30-42) nach Anspruch 7 oder 8, und
- den Berührungssensor (20).

10. Sensoranordnung nach Anspruch 9, wobei das piezoresistives Material mindestens ein Material einer Gruppe umfasst, welche aus Indiumzinnoxid, Graphen und Kohlenstoff-Nanoröhren besteht.

11. Vorrichtung umfassend eine Sensoranordnung (10) nach Anspruch 9 oder 10, wobei die Vorrichtung mindestens eine Vorrichtung (50) aus einer Gruppe umfasst, welche aus einem mobilen Telefon, einem persönlichen digitalen Assistenten, einer mobilen Musikwiedergabevorrichtung und einem Navigationssystem besteht.

## Revendications

1. Procédé de commande d'un capteur tactile, le capteur tactile (20) comprenant une couche de support (21) et une structure de capteur électriquement conductrice (22-27) sur celui-ci, dans lequel la structure de capteur électriquement conductrice (22-27) forme une pluralité de condensateurs (28), les condensateurs (28) ayant une capacité variant en réponse au fait qu'un utilisateur touche le condensateur (28) correspondant ou s'en approche, et dans lequel la structure de capteur électriquement conductrice (22-27) comprend un matériau piézorésistif et est configurée pour produire une résistance variant en réponse à une force qui est appliquée à la couche de support (21), le procédé consistant à :
- délivrer un signal électrique alternatif (30) à la structure de capteur électriquement conductrice (22-27) pour balayer la pluralité de condensateurs (28),
- déterminer une position d'actionnement à laquelle l'utilisateur touche le capteur tactile (20) ou s'en approche sur la base du signal électrique alternatif (30) et des capacités de la pluralité de condensateurs (28),
- détecter un signal électrique qui est fonction de la résistance de la structure de capteur électriquement conductrice (22-27) au moyen d'un pont de Wheatstone (40), une partie (25) du matériau piézorésistif de la structure de capteur électriquement conductrice (22-27) constituant une branche du pont de Wheatstone (40) et le signal électrique alternatif (30) étant délivré au pont de Wheatstone (40) en tant que tension d'alimentation, et
- effectuer une démodulation synchrone du signal électrique détecté sur la base du signal électrique alternatif (30).

2. Procédé selon la revendication 1, consistant en outre à :
- soumettre à un filtrage passe-bas le signal électrique démodulé.

3. Procédé selon la revendication 2, dans lequel l'exécution de la démodulation et du filtrage du signal électrique détecté consiste à démoduler et à filtrer le signal électrique détecté au moyen d'un amplificateur asservi (42).

4. Procédé selon l'une quelconque des revendications précédentes, dans lequel l'exécution de la démodulation du signal électrique détecté consiste à multiplier le signal électrique détecté par le signal électrique alternatif (30).

5. Procédé selon l'une quelconque des revendications précédentes, dans lequel l'exécution de la démodulation du signal électrique détecté consiste à :
- convertir le signal électrique détecté en un signal numérique, et
- effectuer une démodulation synchrone du signal numérique sur la base du signal électrique alternatif (30).

6. Procédé selon la revendication 5, dans lequel l'exécution de la démodulation du signal numérique consiste à :
- déterminer un spectre de fréquences du signal numérique, et
- générer le signal numérique démodulé sur la base du spectre de fréquences et d'une fréquence du signal électrique alternatif (30).

7. Unité de commande destinée à commander un capteur tactile, le capteur tactile (20) comprenant une couche de support (21) et une structure de capteur électriquement conductrice (22-27) sur celui-ci, la structure de capteur électriquement conductrice (22-27) formant une pluralité de condensateurs (28), les condensateurs (28) ayant une capacité variant en réponse au fait qu'un utilisateur touche le condensateur (28) correspondant ou s'en approche, et la structure de capteur électriquement conductrice (22-27) comprenant un matériau piézorésistif et étant configurée pour produire une résistance variant en réponse à une force qui est appliquée à la couche de support (21), l'unité de commande (30-42) comprenant un pont de Wheatstone (40) et étant configurée pour :
- délivrer un signal électrique alternatif (30) à la structure de capteur électriquement conductrice (22-27) pour balayer la pluralité de condensateurs (28),
- déterminer une position d'actionnement à laquelle l'utilisateur touche le capteur tactile (20) ou s'en approche sur la base du signal électrique alternatif (30) et des capacités de la pluralité de condensateurs (28),
- détecter un signal électrique qui est fonction de la résistance de la structure de capteur électriquement conductrice (22-27) au moyen du pont de Wheatstone (40), une partie (25) du matériau piézorésistif de la structure de capteur électriquement conductrice (22-27) constituant une branche du pont de Wheatstone (40) et le signal électrique alternatif (30) étant délivré au pont de Wheatstone (40) en tant que tension d'alimentation, et
- effectuer une démodulation synchrone du signal électrique détecté sur la base du signal électrique alternatif (30).

8. Unité de commande selon la revendication 7, l'unité de commande étant configurée pour mettre en oeuvre les étapes de procédé selon l'une quelconque des revendications 2 à 6.

9. Système de capteur, comprenant :
- une unité de commande (30-42) selon la revendication 7 ou 8, et
- le capteur tactile (20).

10. Système de capteur selon la revendication 9, dans lequel le matériau piézorésistif comprend au moins un matériau appartenant à un groupe constitué de l'oxyde d'indium-étain, du graphène et de nanotubes de carbone.

11. Dispositif comprenant un système de capteur (10) selon la revendication 9 ou 10, le dispositif consistant en au moins un dispositif (50) appartenant à un groupe constitué d'un téléphone mobile, d'un assistant numérique personnel, d'un lecteur de musique mobile et d'un système de navigation.
